# EUROPEAN PATENT SPECIFICATION

(11) **EP 4 537 513 B1**
(45) Date of publication and mention of the grant of the patent: **25.11.2026**
(21) Application number: 22735357.0
(22) Date of filing: 09.06.2022
(51) Int. Cl.: H04L 65/80, H04W 72/04, H04W 72/12, H04W 88/04

(54) **A NODE, A WIRELESS COMMUNICATIONS DEVICE AND METHODS FOR IMPROVING SPECTRUM UTILIZATION IN MEDIA PRODUCTION APPLICATIONS**
KNOTEN, DRAHTLOSE KOMMUNIKATIONSVORRICHTUNG UND VERFAHREN ZUR VERBESSERUNG DER SPEKTRUMSNUTZUNG IN MEDIENPRODUKTIONSANWENDUNGEN
NOEUD, DISPOSITIF DE COMMUNICATION SANS FIL ET PROCÉDÉS POUR AMÉLIORER L'UTILISATION DE SPECTRE DANS DES APPLICATIONS DE PRODUCTION MULTIMÉDIA

(43) Date of publication of application: 16.04.2025
(73) Proprietor: Telefonaktiebolaget LM Ericsson (publ), 164 83 Stockholm (SE)
(72) Inventor: GERAMI, Majid, 224 73 LUND (SE); ANSARI, Junaid, 52080 AACHEN (DE); YANG, Yanpeng, 17739 JÄRFÄLLA (SE)
(74) Representative: Ericsson
(86) International application number: PCT/EP2022/065740
(87) International publication number: WO 2023/237204

(56) References cited:
- US-A1- 2018 206 176
- US-A1- 2021 266 929
- US-A1- 2022 039 100
- US-A1- 2022 159 698

## Description

### BACKGROUND

In a typical wireless communication network, wireless devices, also known as wireless communication devices, mobile stations, stations (STA) and/or User Equipments (UE), communicate via a Local Area Network such as a Wi-Fi network or a Radio Access Network (RAN) to one or more core networks (CN). The RAN covers a geographical area which is divided into service areas or cell areas. Each service area or cell area may provide radio coverage via a beam or a beam group. Each service area or cell area is typically served by a radio access node such as a radio access node e.g., a Wi-Fi access point or a radio base station (RBS), which in some networks may also be denoted, for example, a NodeB, eNodeB (eNB), or gNB as denoted in 5G. A service area or cell area is a geographical area where radio coverage is provided by the radio access node. The radio access node communicates over an air interface operating on radio frequencies with the wireless device within range of the radio access node.

Specifications for the Evolved Packet System (EPS), also called a Fourth Generation (4G) network, have been completed within the 3rd Generation Partnership Project (3GPP). A Fifth Generation (5G) network also referred to as 5G New Radio (NR) has also been specified and work is now directed to further specifications of the 5G network. This work will continue in the coming 3GPP releases.

For reference, the EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio access nodes are directly connected to the EPC core network rather than to RNCs used in 3G networks. In general, in E-UTRAN/LTE the functions of a 3G RNC are distributed between the radio access nodes, e.g. eNodeBs in LTE, and the core network. As such, the RAN of an EPS has an essentially "flat" architecture comprising radio access nodes connected directly to one or more core networks, i.e. they are not connected to RNCs. To compensate for that, the E-UTRAN specification defines a direct interface between the radio access nodes, this interface being denoted the X2 interface. Document US2021/266929A1 discloses a solution in a wireless communication system for prioritizing transmission of wireless communications. Document US2022/159698A1 discloses a solution for improving communication transmissions in full-duplex slots and/or full-UL slots. Document US2018/206176A1 discloses a solution for facilitating high data rate relaying in a wireless communication system. Document US2022/03910 A1 discloses a solution for suitably controlling stopping of uplink transmission.

### Wireless communication systems in 3GPP

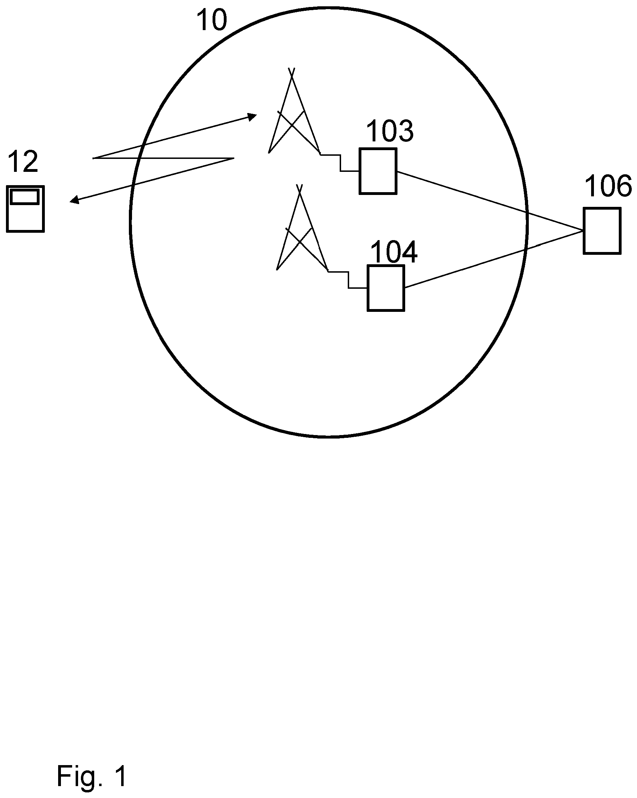

**Figure 1** illustrates a simplified wireless communication system. Consider the simplified wireless communication system in Figure 1, with a **UE 12,** which communicates with one or multiple **access nodes 103-104,** which in turn is connected to a **network node 106.** The access nodes 103-104 are part of the **radio access network 10.**

For wireless communication systems pursuant to 3GPP Evolved Packet System, (EPS), also referred to as Long Term Evolution, LTE, or 4G, standard specifications, such as specified in 3GPP TS 36.300 and related specifications, the access nodes 103-104 correspond typically to Evolved NodeBs (eNBs) and the network node 106 corresponds typically to either a Mobility Management Entity (MME) and/or a Serving Gateway (SGW). The eNB is part of the radio access network 10, which in this case is the E-UTRAN (Evolved Universal Terrestrial Radio Access Network), while the MME and SGW are both part of the EPC (Evolved Packet Core network). The eNBs are inter-connected via the X2 interface, and connected to EPC via the S1 interface, more specifically via S1-C to the MME and S1-U to the SGW.

For wireless communication systems pursuant to 3GPP 5G System, 5GS (also referred to as New Radio, NR, or 5G) standard specifications, such as specified in 3GPP TS 38.300 and related specifications, on the other hand, the access nodes 103-104 correspond typically to an 5G NodeB (gNB) and the network node 106 corresponds typically to either an Access and Mobility Management Function (AMF) and/or a User Plane Function (UPF). The gNB is part of the radio access network 10, which in this case is the NG-RAN (Next Generation Radio Access Network), while the AMF and UPF are both part of the 5G Core Network (5GC). The gNBs are inter-connected via the Xn interface, and connected to 5GC via the NG interface, more specifically via NG-C to the AMF and NG-U to the UPF.

To support fast mobility between NR and LTE and avoid change of core network, LTE eNBs may also be connected to the 5G-CN via NG-U/NG-C and support the Xn interface. An eNB connected to 5GC is called a next generation eNB (ng-eNB) and is considered part of the NG-RAN. LTE connected to 5GC will not be discussed further in this document; however, it should be noted that most of the solutions/features described for LTE and NR in this document also apply to LTE connected to 5GC. In this document, when the term LTE is used without further specification it refers to LTE-EPC.

Distribution of TV and radio services is preceded by the creation of content, whether news, sports or entertainment. In these content-hungry times broadcasters are now looking at employing 3GPP systems for the production and contribution of content as well as its distribution. Content production is undergoing substantial change with the introduction of IP based technologies along the entire work flow. Agile remote production has become an important target, both to meet the 24/7 demand for content and to help reduce costs. However, the increasing data rates demanded by video and audio sources are also posing severe challenges for broadcasters.

In order to further understand the above-mentioned problem of the increasing data rates a simplified system for producing and distributing the content will now be schematically described. The system is referred to as a multiple camera system. The multiple camera system comprises a set of cameras recoding a same or similar scene from different viewpoints.

Operation of the multiple camera system may comprise three phases:
1. Recording
2. Transmission
3. Rendering

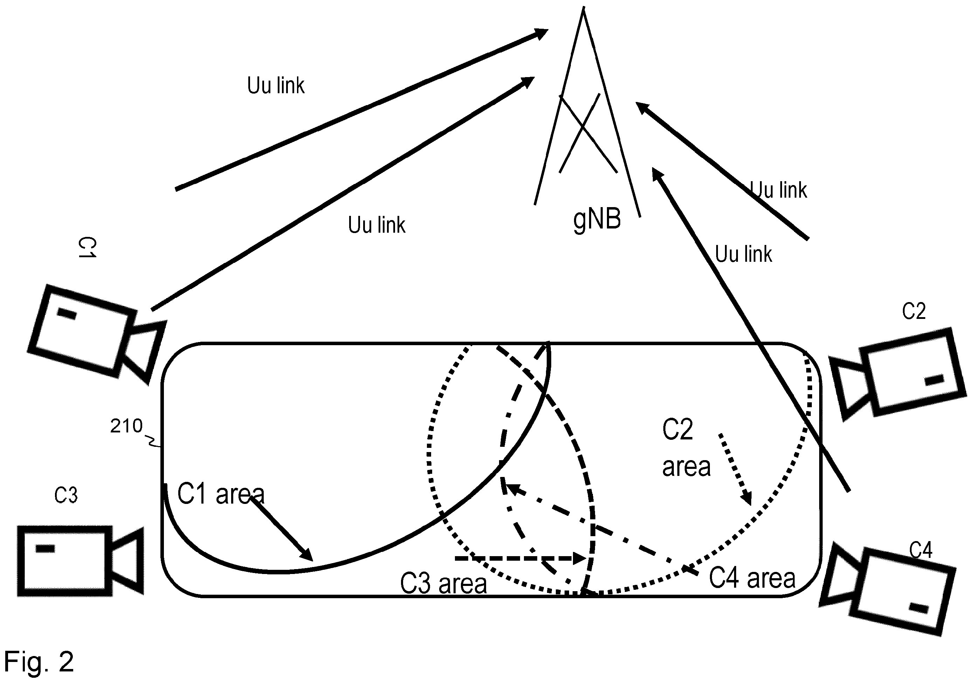

In the recording phase, two or more cameras, such as for example each camera, captures an image of a scene and then encodes the image by a proper codec. In the transmission phase, each recording camera transmits its encoded data to a media server in a centre or cloud for post processing. In a multi-camera system based on a cellular network, which is shown as an example in **Figure 2****,** the transmission of encoded data is by wireless transmission. In the example shown in Figure 2, there are four **cameras C1, C2, C3, C4** which are recording their viewpoint of a scene and transmitting the recorded images to a network node, here a gNB. The scene may comprise **an area 210.** The recorded images may comprise parts of the area 210. The parts of the area 210 may be referred to as **C1 area, C2 area, C3 area and C4 area.** The image content of the cameras C1, C2, C3, C4 is at least partly overlapping. Each camera C1, C2, C3, C4 is associated with a respective wireless communications device, such as a UE.

The gNB may forward the recorded images to the media server of the centre or the cloud. In the rendering phase, a processed or augmented image is transmitted to end users.

In the above-mentioned multiple camera system each device (e.g., camera) may produce large amounts of data to be transmitted to the network, e.g., to the gNB, and eventually to the media server. This requires lots of radio resources for the transmissions thereby putting very high demands on wireless network capacity. Often it is not possible to meet such demands on wireless spectrum resources or it becomes highly costly. In the simplified example in Figure 2, there are four devices (e.g., cameras) taking videos of every part of a scene. These cameras independently produce media content that is transmitted to the gNB putting high demands on the radio spectrum. Specifically, lots of radio resources are required to transmit all these videos simultaneously to the network.

### SUMMARY

In many cases the above-mentioned media content is undesired, redundant or non-demanded. Improving the efficiency of radio resource utilization in these types of use-cases is very important, especially since the maximum uplink capacity is typically significantly lower than maximum downlink capacity e.g., due to UE capability, TDD patterns, etc. A problem is therefore how to reduce the amount of data transmission from media producing equipment without affecting the quality of images and/or videos of the desired and/or demanded media content in the network.

An object of embodiments herein may be to obviate some of the problems related to UL transmission of media content. The invention is defined by the subject-matter of the independent claims. Further details are provided in the dependent claims.

According to an aspect of embodiments herein, the object is achieved by a method, performed by a first node, for coordinating UL transmissions of associated image data from multiple wireless communications devices in a wireless communications network. The method comprises:
determining that a first and a second wireless communications device of the multiple wireless communications devices intend to transmit respective first and second multimedia data in UL to a radio network node, the first and second multimedia data comprising at least partially overlapping content; and in response to the determining
transmitting a coordination message to the first wireless communications device comprising an indication to refrain from transmitting at least part of the first multimedia data in UL to the radio network node.

According to a second aspect of embodiments herein, the object is achieved by a first node, for coordinating UL transmissions of associated image data from multiple wireless communications devices in a wireless communications network, the first node being configured to:
determine that a first and a second wireless communications device of the multiple wireless communications devices intend to transmit respective first and second multimedia data in UL to a radio network node, the first and second multimedia data comprising at least partially overlapping content; and
transmit, in response to the determination, a coordination message to the first wireless communications device comprising an indication to refrain from transmitting at least part of the first multimedia data in UL to the radio network node.

According to a third aspect of embodiments herein, the object is achieved by a method, performed by a wireless communications device, for coordinated UL transmission of multimedia data in a wireless communications network. The method comprises:
receiving, from a first node a coordination message comprising an indication to refrain from transmitting at least part of first multimedia data in UL to the radio network node; and
based on the received coordination message transmitting only a part, not comprising the at least part, of the first multimedia data in the UL to the radio network node, or refraining from transmitting the first multimedia data in the UL to the radio network node.

According to a fourth aspect of embodiments herein, the object is achieved by a wireless communications device, configured for coordinated UL transmission of multimedia data in a wireless communications network. The wireless communications device is further configured to:
receive, from a first node a coordination message comprising an indication to refrain from transmitting at least part of first multimedia data in UL to the radio network node; and based on the received coordination message
transmit only a part, not comprising the at least part, of the first multimedia data in the UL to the radio network node, or
refrain from transmitting the first multimedia data in the UL to the radio network node.

Since the first node transmits a coordination message to the first wireless communications device comprising an indication to refrain from transmitting at least part of the first multimedia data in UL to the radio network node spectral radio resource utilization is improved.

The disclosed embodiments avoid or at least reduces the amount of unwanted data transmitted to the base station. This makes more resources available for other transmissions from other UEs and lowers effective radio spectrum demands.

Another advantage is that wireless communications devices that do not transmit unwanted and/or undesired data save their energy resources.

Another advantage is that less uplink transmissions makes less uplink interference to other devices. This in turn helps improves the reliability of the wireless transmission link and increases the achievable data rates.

### BRIEF DESCRIPTION OF THE DRAWINGS

Examples of embodiments herein are described in more detail with reference to attached drawings in which:
- **Figure 1**: is a schematic block diagram illustrating embodiments of a wireless communications network.
- **Figure 2**: is a schematic block diagram illustrating embodiments of a multiple camera system.
- **Figure 3**: is a schematic block diagram illustrating embodiments of a wireless communications network.
- **Figure 4a**: is a signaling diagram depicting a method in a wireless communications network according to embodiments herein.
- **Figure 4b**: is a schematic block diagram illustrating embodiments of a wireless communications network.
- **Figure 4c**: is a schematic block diagram illustrating embodiments of a wireless communications network.
- **Figure 5**: is a further signaling diagram depicting a method in a wireless communications network according to embodiments herein.
- **Figure 6a**: is a yet further signaling diagram depicting a method in a wireless communications network according to embodiments herein.
- **Figure 6b**: is a schematic block diagram illustrating further embodiments of a wireless communications network.
- **Figure 7a**: is a schematic block diagram illustrating embodiments herein.
- **Figure 7b**: is a schematic block diagram illustrating embodiments herein.
- **Figure 8**: is a flowchart depicting a method in a first node according to embodiments herein.
- **Figure 9**: is a flowchart depicting a method in a wireless communications device according to embodiments herein.
- **Figure 10**: is a schematic block diagram illustrating embodiments of a first node.
- **Figure 11**: is a schematic block diagram illustrating embodiments of a wireless communications device.
- **Figure 12**: schematically illustrates a telecommunication network connected via an intermediate network to a host computer.
- **Figure 13**: is a generalized block diagram of a host computer communicating via a base station with a user equipment over a partially wireless connection.
- **Figures 14-17**: are flowcharts illustrating methods implemented in a communication system including a host computer, a base station and a user equipment.

### DETAILED DESCRIPTION

As mentioned above, there are challenges and issues with wireless UL transmission of media content in a wireless communications network.

An object of embodiments herein is therefore to improve wireless UL transmission of media content in a wireless communications network.

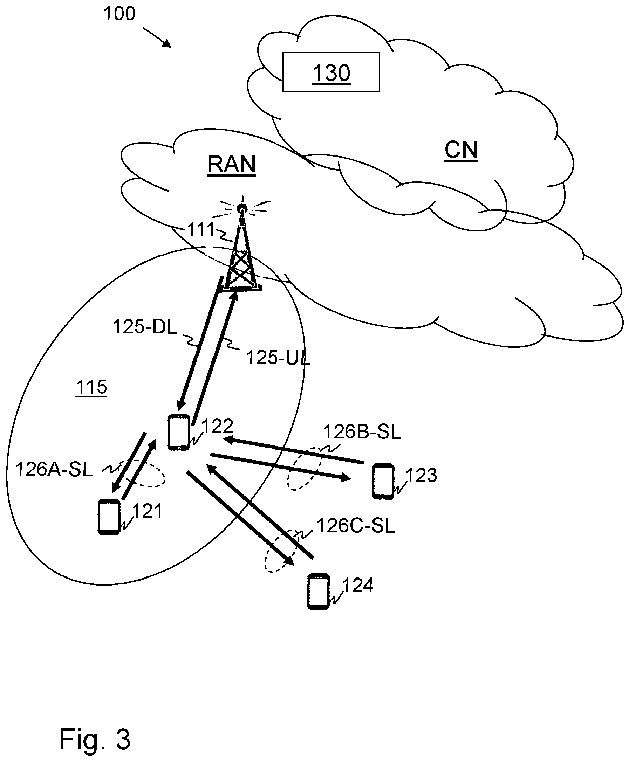

Embodiments herein relate to communication networks in general, and specifically to wireless communication networks. **Figure 3** is a schematic overview depicting **a wireless communications network 100** wherein embodiments herein may be implemented. The wireless communications network 100 comprises one or more RANs and one or more CNs. The wireless communications network 100 may be a cellular network. Further, the wireless communications network 100 may use a number of different technologies, such as Wi-Fi, Long Term Evolution (LTE), LTE-Advanced, 5G, New Radio (NR), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE, or in a context of future wireless communication systems such as 6G systems.

Access nodes operate in the wireless communications network 100 such as **a radio access node 111.** The radio access node 111 provides radio coverage over a geographical area, a service area **referred to as a cell 115,** which may also be referred to as a beam or a beam group of a first radio access technology (RAT), such as 5G, LTE, Wi-Fi or similar. The radio access node 111 may be a NR-RAN node, transmission and reception point e.g. a base station, a radio access node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating with a wireless device within the service area depending e.g. on the radio access technology and terminology used. The respective radio access node 111 may be referred to as a serving radio access node and communicates with a UE with Downlink (DL) transmissions on **a DL channel 125-DL** to the UE and Uplink (UL) transmissions on **an UL channel 125-UL** from the UE.

A number of wireless communications devices (or UEs) operate in the wireless communication network 100, such as **a first wireless communications device 121, a second wireless communications device 122, a third wireless communications device 123, and a fourth wireless communications device 124.**

The UE 121 may be a mobile station, a non-access point (non-AP) STA, a STA, a user equipment and/or a wireless terminal, that communicate via one or more Access Networks (AN), e.g. RAN, e.g. via the radio access node 111 to one or more core networks (CN) e.g. comprising a **CN node 130,** for example comprising an Access Management Function (AMF). It should be understood by a person the skilled in the art that "UE" is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or even a small base station communicating within a cell.

In Figure 3 the radio access node 111 and the CN node 130, have been illustrated as single units. However, as an alternative, each node 111, 130 may be implemented as a Distributed Node (DN) and functionality, e.g. comprised in a **cloud 140** as shown in Figure 3, may be used for performing or partly performing the methods disclosed herein. There may be a respective cloud for each node.

Embodiments herein will now be described in relation to multiple audio/video recording/streaming devices (e.g., cameras) in media production. The devices may correspond to the first wireless communications device 121, the second wireless communications device 122, the third wireless communications device 123, and the fourth wireless communications device 124 in Figure 3.

According to embodiments herein the wireless communications devices coordinate among one another and/or with the radio access node 111, such as a base station, to determine which portion of data each device should transmit to the radio access node 111 (e.g., gNB) at a given time, in order to avoid the transmission of undesired/unwanted data. The amount of data transmission in the UL at a given time is reduced in two ways using embodiments disclosed herein: (1) The wireless communications devices, such as the camera's terminals, transmit reduced content, e.g., a subset of the content generated, (2) not all the wireless communications devices comprising cameras transmit at a given time. For example, only a subset of the total number of camera systems transmits at a given time.

Embodiments disclosed herein describe methods with signaling diagrams as examples where sidelink communication allows coordination among UEs to achieve significantly lower transmission to the base station by individual UEs.

Note that overhead of transmitted control information, such as an indication of each UE's location, angle of shooting etc. as will be presented in more detail below, over an Uu interface between the wireless communications devices and the radio network node 111 or over sidelink is negligible compared the volume of data transmitted from the wireless communications devices 121- 124 to the radio access node 111.

The coordination of the UL transmissions improves the spectral utilization of the radio resources and the energy efficiency and reduces the interference in the wireless communications network 100.

Since some embodiments use control signaling in direct communication between the wireless communications devices 121-124, e.g. control signaling over sidelink, to coordinate the UL transmissions of media content, examples of such direct communication will be presented first.

### Sidelink communication in NR

Sidelink (SL) communication over NR are specified for Rel. 16. These are enhancements of the ProSe (PROximity-based SErvices) specified for LTE. Four new enhancements are particularly introduced to NR sidelink transmissions as follows:
- Support for unicast and groupcast transmissions are added in NR sidelink. For unicast and groupcast, the physical sidelink feedback channel (PSFCH) is introduced for a receiver UE to reply to the decoding status to a transmitter UE.
- Grant-free transmissions, which are adopted in NR uplink transmissions, are also provided in NR sidelink transmissions, to improve the latency performance.
- To alleviate resource collisions among different sidelink transmissions launched by different UEs, it enhances channel sensing and resource selection procedures, which also leads to a new design of Physical Sidelink Control Channel (PSCCH).
- To achieve a high connection density, congestion control and thus the QoS management is supported in NR sidelink transmissions.

Another new feature is the two-stage sidelink control information (SCI). This a version of the Downlink Control Information (DCI) for SL. Unlike the DCI, only part (first stage) of the SCI is sent on the PSCCH. This part is used for channel sensing purposes (including the reserved time-frequency resources for transmissions, demodulation reference signal (DMRS) pattern and antenna port, etc.) and may be read by all UEs while the remaining (second stage) scheduling and control information such as a 8-bits source identity (ID) and a 16-bits destination ID, New data Indicator (NDI), Redundancy version (RV) and Hybrid automatic repeat request (HARQ) process ID is sent on a Physical Sidelink Secure Channel (PSSCH) to be decoded by the receiver UE.

Similar as for PRoSE in LTE, NR sidelink transmissions have the following two modes of resource allocations:
- Mode 1: Sidelink resources are scheduled by a gNB.
- Mode 2: The UE autonomously selects sidelink resources from a (pre-)configured sidelink resource pool(s) based on the channel sensing mechanism.

For an in-coverage UE, a gNB may be configured to adopt Mode 1 or Mode 2. For the out-of-coverage UE, only Mode 2 may be adopted.

As in LTE, scheduling over the sidelink in NR is done in different ways for Mode 1 and Mode 2.

Mode 1 supports the following two kinds of grants:
Dynamic grant: When the traffic to be sent over sidelink arrives at a transmitter UE, this UE should launch the four-message exchange procedure to request sidelink resources from a gNB (Scheduling Request (SR) on UL, grant, Buffer Status Report (BSR) on UL, grant for data on SL sent to UE). During the resource request procedure, a gNB may allocate a sidelink radio network temporary identifier (SL-RNTI) to the transmitter UE. If this sidelink resource request is granted by a gNB, then the gNB indicates the resource allocation for the PSCCH and the PSSCH in the downlink control information (DCI) conveyed by PDCCH with Cyclic Redundancy Check (CRC) scrambled with the SL-RNTI. When a transmitter UE receives such a DCI, a transmitter UE may obtain the grant only if the scrambled CRC of DCI may be successfully solved by the assigned SL-RNTI. A transmitter UE then indicates the time-frequency resources and the transmission scheme of the allocated PSSCH in the PSCCH, and launches the PSCCH and the PSSCH on the allocated resources for sidelink transmissions. When a dynamic grant is obtained from a gNB, a transmitter UE may only transmit a single Transport Block (TB). As a result, this kind of grant is suitable for traffic with a loose latency requirement.
Configured grant: For traffic with a strict latency requirement, performing the four-message exchange procedure to request sidelink resources may induce unacceptable latency. In this case, prior to the traffic arrival, a transmitter UE may perform the four-message exchange procedure and request a set of resources. If a grant may be obtained from a gNB, then the requested resources are reserved in a periodic manner. Upon traffic arriving at a transmitter UE, this UE may launch the PSCCH and the PSSCH on the upcoming resource occasion. In fact, this kind of grant is also known as grant-free transmissions.

In both dynamic grant and configured grant, a sidelink receiver UE cannot receive the DCI (since it is addressed to the transmitter UE), and therefore a receiver UE should perform blind decoding to identify the presence of PSCCH and find the resources for the PSSCH through the SCI.

When a transmitter UE launches the PSCCH, CRC is also inserted in the SCI without any scrambling.

In the Mode 2 resource allocation, when traffic arrives at a transmitter UE, this transmitter UE should autonomously select resources for the PSCCH and the PSSCH. To further minimize the latency of the feedback HARQ ACK/NACK transmissions and subsequent retransmissions, a transmitter UE may also reserve resources for PSCCH/PSSCH for retransmissions. To further enhance the probability of successful TB decoding at one shot and thus suppress the probability to perform retransmissions, a transmitter UE may repeat the TB transmission along with the initial TB transmission. This mechanism is also known as blind retransmission. As a result, when traffic arrives at a transmitter UE, then this transmitter UE should select resources for the following transmissions:
1) The PSSCH associated with the PSCCH for initial transmission and blind retransmissions.
2) The PSSCH associated with the PSCCH for retransmissions.

Since each transmitter UE in sidelink transmissions should autonomously select resources for above transmissions, how to prevent different transmitter UEs from selecting the same resources turns out to be a critical issue in Mode 2. A particular resource selection procedure is therefore imposed to Mode 2 based on channel sensing. The channel sensing algorithm involves measuring Reference Signal Received Power (RSRP) on different subchannels and requires knowledge of the different UEs power levels of DMRS on the PSSCH or the DMRS on the PSCCH depending on the configuration. This information is known only after receiving SCI launched by (all) other UEs. The sensing and selection algorithm is rather complex.

In embodiments herein the wireless communications devices 121-124 have the capability for UL transmission to the wireless communications network 100. The UL transmission may be a cellular transmission.

In some embodiments herein the wireless communications devices 121-124 may further have the capability for sidelink transmission.

In embodiments disclosed herein the term sidelink is used as a general term for communication between two wireless communications devices 121-124. For example, sidelink may refer to device to device or D2D communication. In non-limiting examples, the sidelink transmission may be as defined in 3GPP, e.g., based on LTE or NR, Bluetooth or Wi-Fi technologies.

In embodiments herein the wireless communications devices 121-124 comprise cameras including image capturing devices, e.g., including image sensors. In other words, cameras and/or image sensors may be equipped with 5G modem/modules (e.g., UEs) for communication.

As mentioned above, some embodiments herein assume that there are communication possibilities between the wireless communications devices 121-124, e.g., camera systems may send or receive messages from other camera systems.

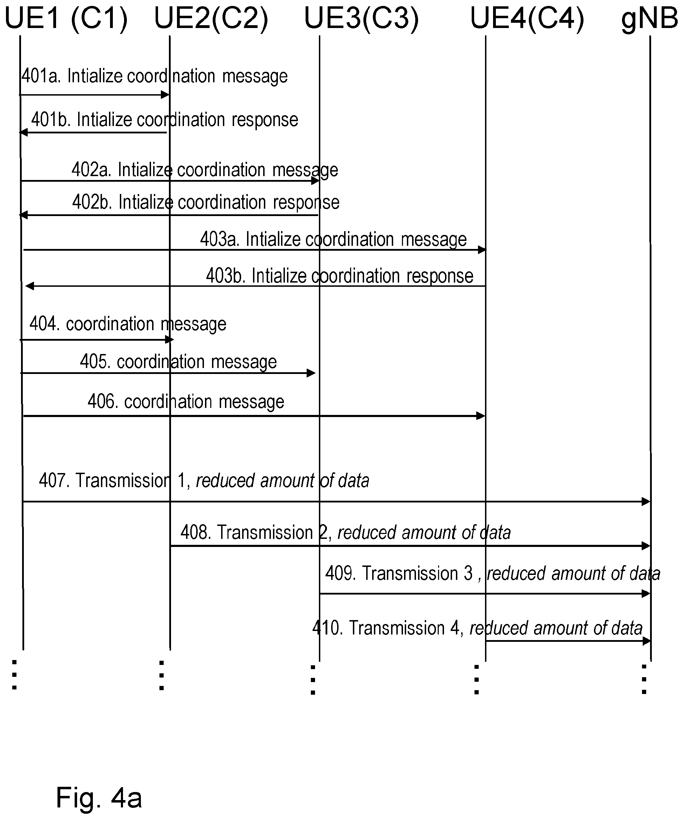

Embodiments herein will now be described with reference to a first signaling diagram in Figure 4a, and with continued reference to Figure 3. The signaling diagram illustrates a method for coordinating UL transmissions of associated image data from multiple wireless communications devices 121, 122 in the wireless communications network 100.

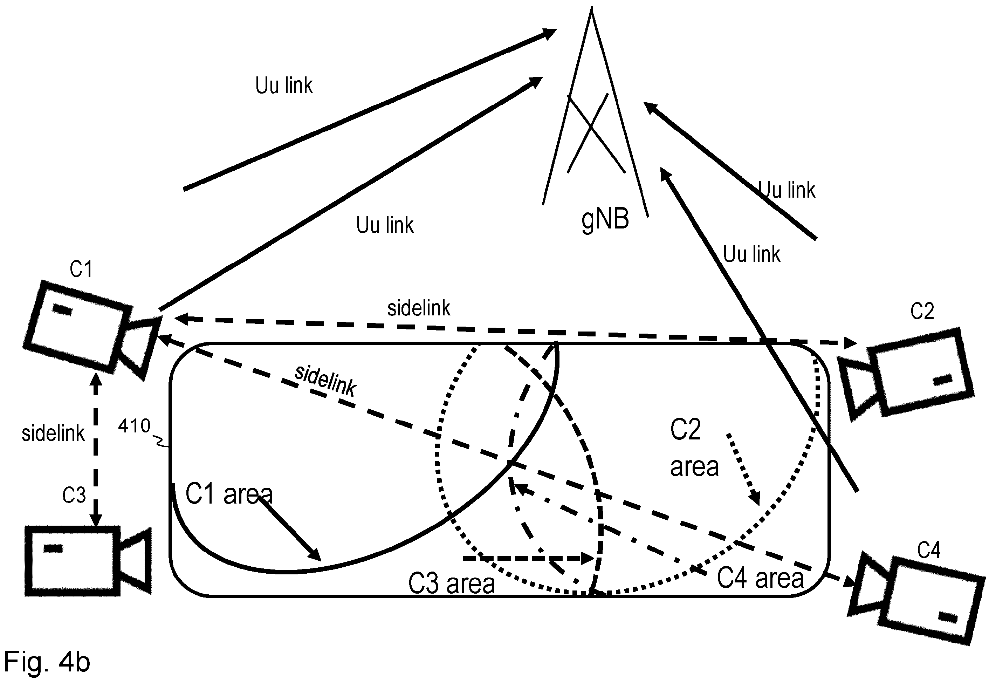

In a scenario of a live coverage of e.g. a football game, a desirable portion of the sports field may be covered by multiple camera systems. These embodiments will also be described with reference to Figure 4b. Figure 4b illustrates an area 410, such as a football field. Figure 4b further illustrates four cameras C1, C2, C3, C4, each associated with a respective wireless communications device 121, 122, 123, 124 of the wireless communications devices 121, 122, 123, 124. Each camera C1, C2, C3, C4 covers a respective part of the area 410 referred to as C1 area, C2 area, C3 area and C4 area in Figure 4b. In other words, the image content of each camera corresponds to at least a part of the area 410. Initially, the image content of the cameras C1, C2, C3, C4 is at least partly overlapping, e.g., corresponding to the overlapping camera areas C1 area, C2 area, C3 area and C4 area. For example, each image content may be partly overlapping at least one other image content from one other camera, such as illustrated in Figure 4b.

In the following description of Figures 4a-4c and Figures 5a-5b and Figures 6a-6b, the wireless communications devices 121, 122, 123, 124 will be referred to as UEs and the radio access node 111 will be referred to as gNB.

There may be three phases in transmission as follows.

Phase 1) **Initialization:** A coordinator UE, such as UE1, may send **401a, 402a, 403a** an *"initialize coordination message" to* other UEs, such as UE2, UE3 and UE4, and inform them that there is coordination before starting transmission. The coordinator UE may e.g. correspond to or be associated with camera C1 in Figure 4b. The coordination message may be sent on a sidelink. Other cameras respond **401b, 402b, 403b** to the above message by a *"initialize coordination response".* In the response message, each camera system may give information about camera parameters like camera location, direction/angle of capture, field of view, angle of view, resolution, depth of field, frame rates, time for capture (e.g., start and/or end time), etc. such that the coordinator UE may use this information to coordinate the UL transmissions from the cameras. For example, the coordinating UE may, based on the received information from the cameras, determine which parts of the image content from the cameras that should be transmitted in UL (e.g., no part, a first part, a second part, all parts). In Figure 4b the UL is referred to as Uu link.

Additionally, information about other (internal or external) sensors like Radar, Lidar, ultrasonic sensors, gyroscopes, etc. may be part of the exchange information, such that the coordinator UE may use also this information about other sensors to coordinate the UL transmissions from the cameras. For example, information from radar or LiDAR may provide depth or ranging information. This may give the coordinator a sense of how far the covered object/scene is from the camera. The gyroscope may allow the coordinator to infer motion dynamics of the camera system. This may for example help to determine whether or not a scene is sufficiently different compared to a the previous position of the camera. Moreover, information from the gyroscope may help the coordinator in the multiple camera system to assess which cameras are potentially covering the overlapping scenes and to which degree.

Phase 2) **Coordination:** The coordinator UE sends 404, 405, 406 *coordination messages to other camera systems which explicitly say which part of view should be set by each camera or the subset of cameras to transmit.*

Phase 3) **Transmission:** Cameras start transmission 407, 408, 409, 410 based on the coordinated information.

In the example of Figure 4a, UE1 takes the role of coordinator and communicates to other camera nodes and decides which UEs should transmit which part of the scene.

In an example embodiment, each camera transmits to the gNB a partial scene (coverage area) for a given flexibly configurable time duration, or only a subset of cameras transmit at a given time. Thus, the media content transmission to the gNB by each camera is coordinated among the UEs. Overall, a reduced amount of media content is transmitted to the network and hence less amount of radio resources is used.

In a further embodiment not shown in Figure 4a nor Figure 4b, UE1 sends the coordination message to UE2. UE2 forwards the message to UE4 and finally UE4 forwards the coordination message to UE3. After that, each UE transmits its data to gNB based on the coordination message.

In NR, the coordination messages between devices may be transmitted over physical channels, such as PSSCH or PSCCH.

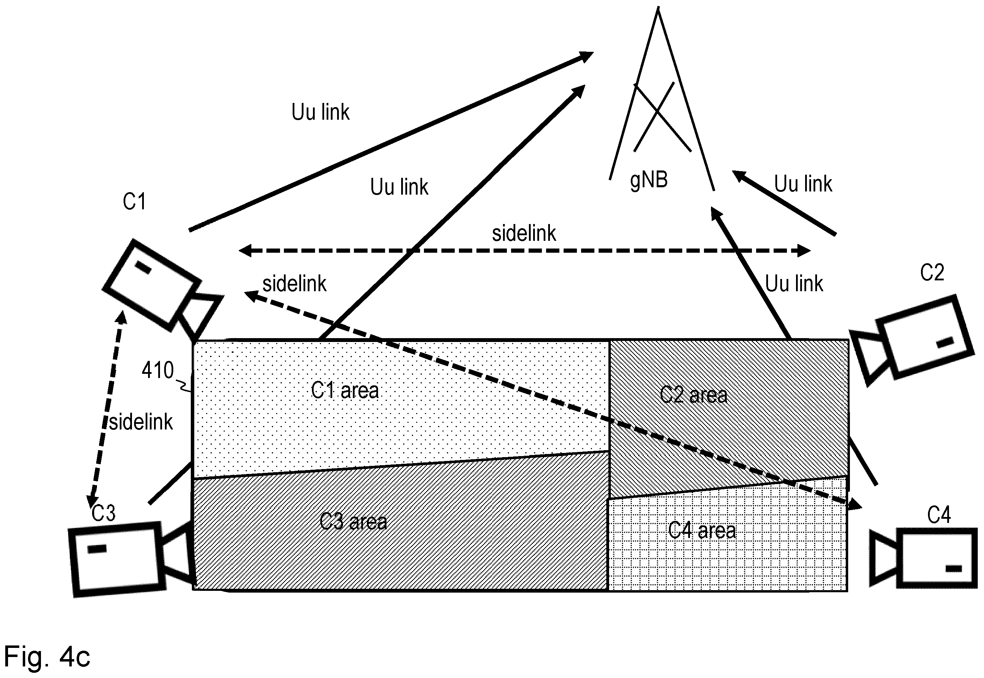

**Figure 4c** is a schematic block diagram illustrating embodiments of a wireless communications network.

Figure 4c illustrates an example of how the area 410 or a corresponding pixel map of the area 410 may be divided between the four cameras C1, C2, C3, C4 such that no or at least less overlap of image content is sent to the gNB on the Uu link. The coordinating node, such as a coordinating UE, may send information to the participating UEs, e.g., as D2D communication on sidelink, about which part of the area 410 or which part of the image content, e.g. which part of the corresponding pixel map of the area 410, that each UE should transmit in the UL.

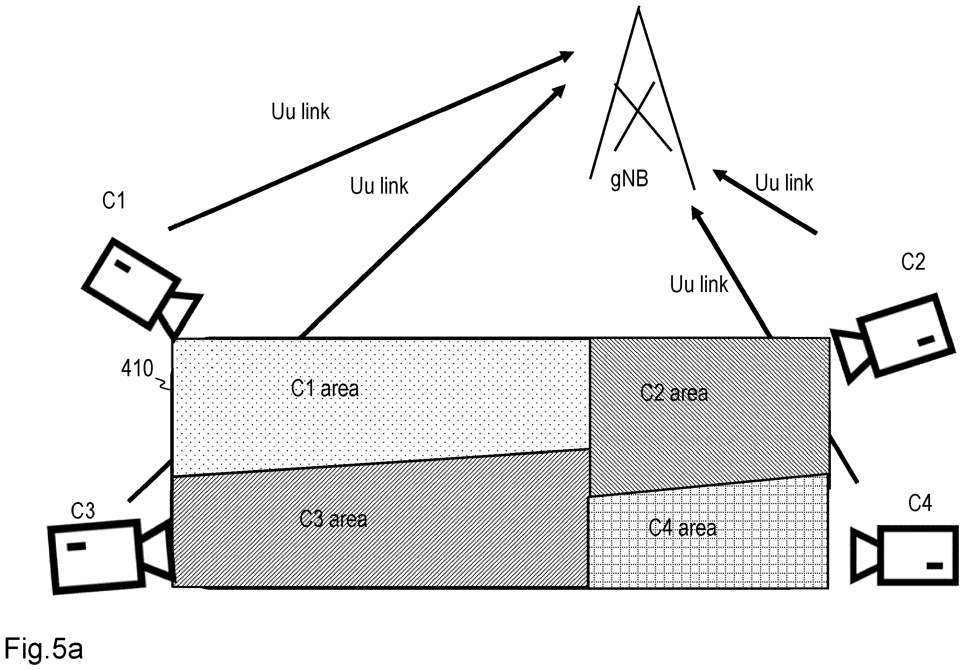

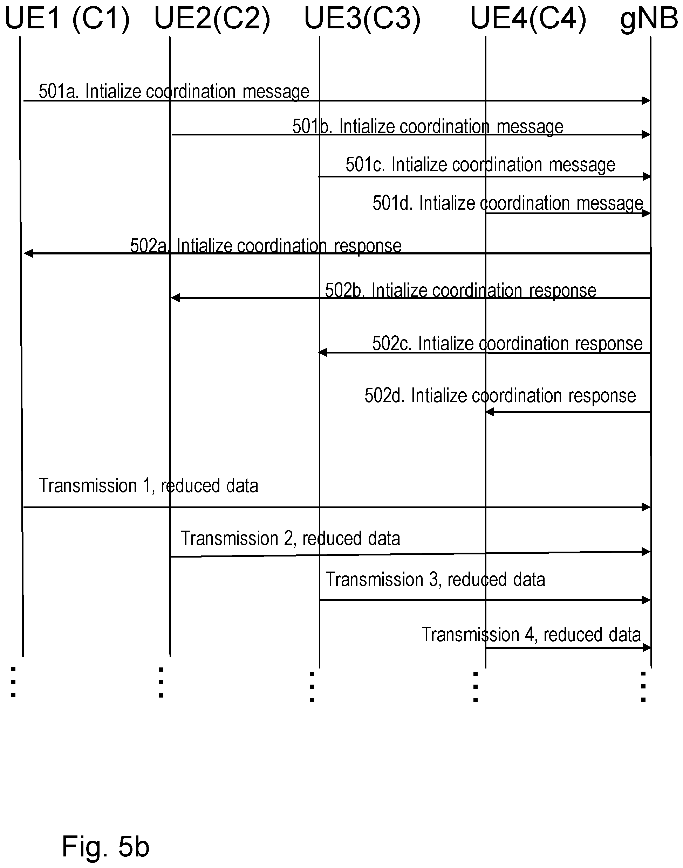

Some other embodiments, illustrated in **Figure 5a****,** discloses a procedure at the gNB for controlling transmission of cameras in order to reduce the load on the system. Then the UEs transmit their information e-g., location, angle of shooting and so on to the gNB. The gNB decides for each camera which portion of the captured image to transmit. Thus, in Figure 5a the gNB controls the transmission of cameras to reduce the load on the system. Such embodiments will now be described with further reference to a second signaling diagram in **Figure** 5b.

In an embodiment, first the gNB notices that a set of wireless communications devices are transmitting data from cameras which are covering the same area 410/scene or view. The gNB may obtain this notice by one of the following methods:
- Collecting uplink received data for a period of time and calculating a degree of overlap between transmitted data from different devices. This collection may for example be performed as **actions 501a-501d** in Figure 5b.
- By UE/wireless communications devices sending information to the gNB e.g., positioning information, direction, angle of shooting (camera parameters like zoom, resolution, focal length etc. may also be exploited): if the gNB has access to the UE's position, direction, and angle of shooting it may predict the shooting area and/or image content of each camera. All UEs may transmit some information e.g., their location, angle of shooting and so on to the gNB. This collection may for example be performed as actions 501a-501d in Figure 5b.
- Ues broadcast information to each other over the sidelink. Then one of the UEs (here referred to as the coordinator UE (C1)) sends information to the gNB about the image capturing by the group of devices that is shooting a scene, e.g. in action 501a.

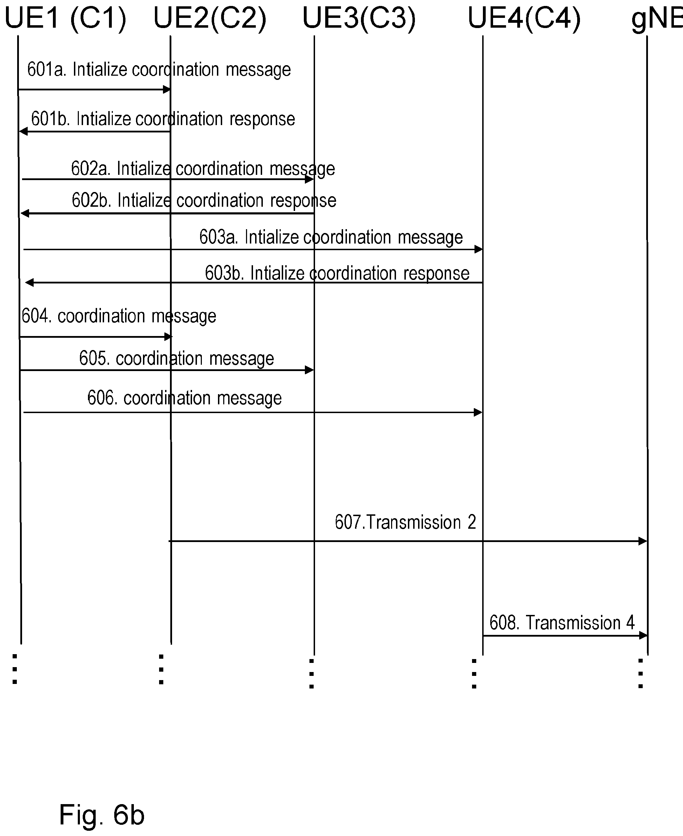

Next, the gNB or the coordinator UE requests other UEs not to transmit all their captured image information, for example implemented as **actions 502a-502d** in Figure 5b. The captured image information may be a captured and processed image, or even an encoded image. By that, the cameras do not transmit to the gNB all the video/image content that they captured. For example, the "Intialize coordination responses" of actions 502a-502d may indicate to each UE and camera which part of the field of view to transmit. There may be at least two cases, which may be configured dynamically for a given flexible time duration:
- A respective wireless communications device 121-124 transmits parts of the captured image content at a given time. This is for example illustrated with **Transmissions 1-4** in Figure 5b.
- Only a subset of the wireless communications devices 121-124 transmit and some wireless communications devices 121-124 do not transmit at a given time. This is for example illustrated with **Transmissions 2 and 4** in Figure 6b.

The wireless communications devices 121-124 may communicate with and inform each other of which parts of the image that they will send in the UL to the gNB, for example the parts may be presented as parts of an image matrix that they will send to the gNB. The coordination message may be constructed by one the following methods:
- One wireless communications device 121-124 plays the role of coordinator and decides/coordinates about the transmission of all devices, such as the other devices.
- There is not necessarily a fixed designated coordinating UE. The UEs may communicate together, may dynamically select a coordinator node and the coordinator node decide about the transmission of each device. Thus, any node, such as any UE or the gNB, may become the coordinator node based on communication between UEs. The selection of the coordinator may be based on the location of the nodes, a capability of the nodes, overlapped degree of the generated media content, etc.
- The gNB constructs the coordination message and sends it to one UE, e.g., through PDCCH or PDSCH channels.

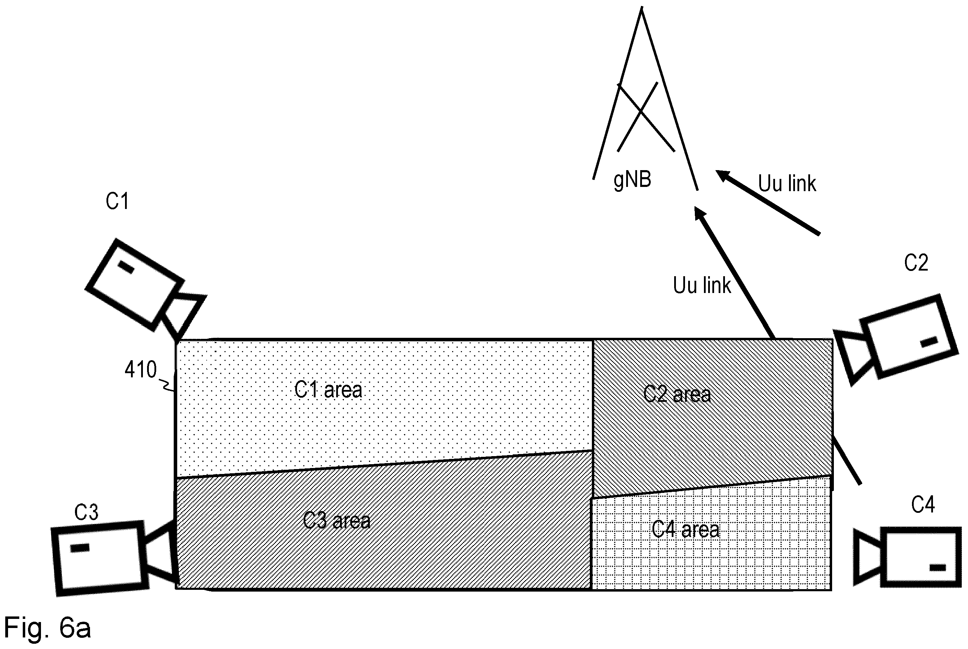

In another embodiment, for some use-cases (e.g., observing only one angle of sports field) some cameras may skip transmission at a given time. This of course may be configured dynamically. This case is shown in Figure 6a, where only camera systems C2 and C4 are transmitting to the gNB. Figure 6b is a further signaling diagram which also illustrates this embodiment where only UE2 and UE4 transmits to the gNB.

Other cameras may potentially record the produced media content locally but only transmit when demanded. For instance, in a football match a special event (e.g., determining a foul, etc.) may need to be viewed from multiple angles, that is from multiple cameras, but during usual transmission of the game there is no need for viewing from multiple angles, or at least less viewing angles are needed.

Actions 601a-606 correspond to actions 401a-406 of Figure 4a where UE1 exchange coordination messages with the other UEs. Based on the coordination among UEs, only UE3 and UE4 transmit the content to the gNB to reduce the redundant/undesired transmissions at a given time. The reduced number of transmissions are illustrated by action 607 and action 608, which may replace actions 407-410 of Figure 4a.

In another embodiment, the cameras may be configured by RRC configuration, once at the starting point of capturing images and/or videos. Since the camera may be moving dynamically and changing their captured scene, so in this case, the solution of configuring once is not efficient. Instead, in some embodiments the configuration is dynamic e.g., it may be changed/reconfigured over time depending upon the application and scenario requirements. Besides the content and camera capturing parameters (focal length, view angle, depth, resolution, etc.), the content's demand may be dynamic - thus a dynamic configuration of the transmission content may be needed. That is, the cameras may change their angle of capturing images.

### Coordination message between devices

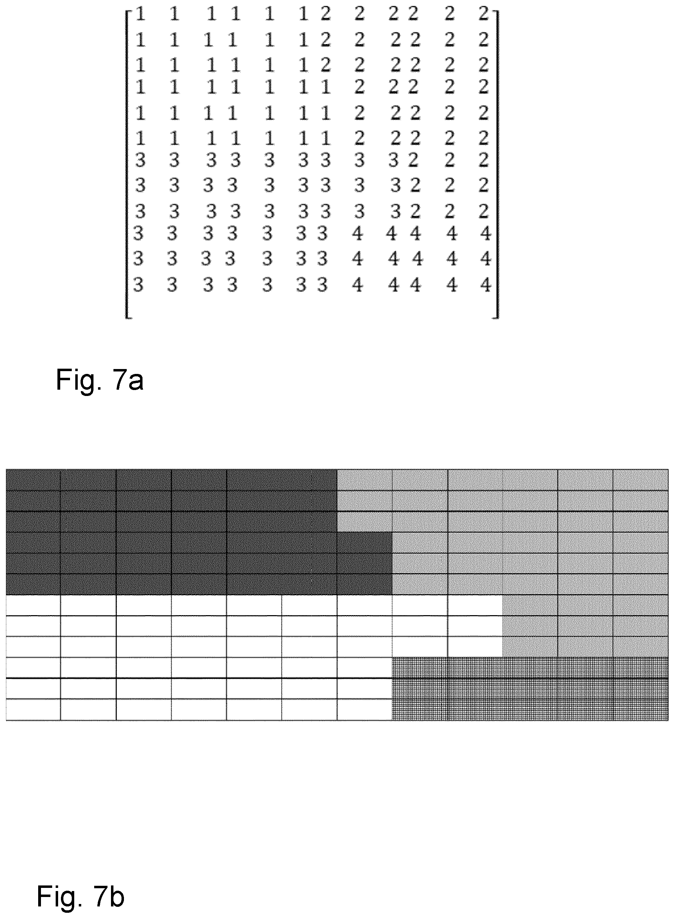

In some embodiments, the coordination message is an image matrix, e.g., a matrix of the scene view that is divided based on required image resolution. The matrix shows which pixel of the view that should be reported by each UE. An example of such a matrix is shown in Figure 7a, where the scene view is divided into 12x12 pixels and the matrix indicates which camera 1, 2, 3 or 4 should report which matrix element to the gNB.

**Figure 7b** is an alternative, more graphic, illustration of a transmission matrix. In Figure 7b each matrix element is filled with a fill pattern. Different UEs correspond to different fill patterns. The matrix of Figure 7b correspond to the matrix of Figure 7a.

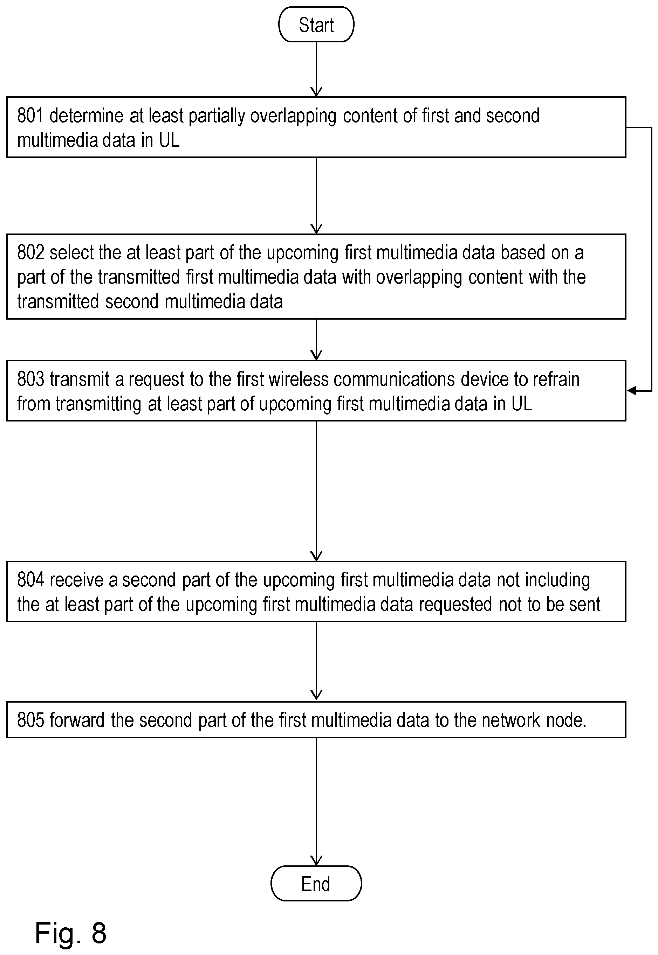

Exemplifying methods according to embodiments herein will now be described with reference to a flow chart in **Figure** 8 and with continued reference to Figure 3. The flow chart illustrates a method, performed by a first node 111, 122, for coordinating UL transmissions of associated image data from multiple wireless communications devices 121, 122 in a wireless communications network 100. In some embodiments herein the first node 111, 122 is a radio access node 111. In some other embodiments herein the first node 111, 122 is a wireless communications device 122.

### action 801

The first node 111, 122 determines that the first and the second wireless communications device 121, 122 of the multiple wireless communications devices 121, 122 intend to transmit respective first and second multimedia data in UL to the radio network node 111. The first and second multimedia data comprises at least partially overlapping content.

In some embodiments the first multimedia data is to be transmitted in a first UL transmission time resource at least partly overlapping a second UL transmission time resource in which the second wireless communications device is to transmit a second multimedia data in UL to the radio network node 111.

The indication to refrain from transmitting the at least part of the multimedia data may indicate to transmit a part of the multimedia data.

The indication to transmit the part of the multimedia data may indicate a specific part, such as a first part or a second part. The indication may be an association with a given part of the transmitted multimedia content.

In some embodiments herein the indication to refrain from transmitting the at least part of the multimedia data indicates to refrain from transmitting the entire multimedia data. For example, only a subset of wireless communications devices may transmit associated multimedia data and some wireless communications devices do not transmit associated multimedia data at a given time.

The respective multimedia data may comprise image data.

In some embodiments the first and second wireless communications device 121, 122 comprises a respective image capturing device C1, C2. Then determining that the first and the second wireless communications devices 121, 122 will transmit the respective first and second multimedia data with at least partially overlapping content comprises receiving a respective message from the first and second wireless communications devices 121, 122. The respective message comprising information about settings of parameters of the respective image capturing device C1, C2, the parameters affecting the image data. The respective message may correspond to the above-mentioned initialize coordination response. The settings of parameters of the respective image capturing device C1, C2 may correspond to settings of multimedia data to be transmitted or of multimedia data that has been transmitted.

Then determining that the first and the second wireless communications devices 121, 122 will transmit the respective first and second multimedia data with at least partially overlapping content further comprises determining, based on the received settings of the parameters of the respective image capturing device C1, C2, that content of first image data of the first multimedia data at least partially overlaps content of second image data of the second multimedia data.

The parameters of the respective image capturing device C1, C2 may comprise one or more of: field of view, image sensor resolution, depth of field, image frame rate, time for capture of the image data, position of the image capturing device, and viewing direction of the image capturing device C1, C2.

In some embodiments herein, determining that the first and the second wireless communications devices 121, 122 will transmit the respective first and second multimedia data with at least partially overlapping content comprises detecting that the first and the second wireless communications device 121, 122 has transmitted respective first and second multimedia data in UL to the radio network node 111, with at least partially overlapping content.

As mentioned above, the first node may be the wireless communications device 122. Then the coordination message and the respective message are transmitted directly between the wireless communications devices 121, 122 without passing the network node 111 of the wireless communications network 100. For example, the coordination message and the respective message may be transmitted on sidelink.

### action 802

In some embodiments the first node 111, 122 selects the at least part of the first multimedia data not to be transmitted in UL based on a part of transmitted first multimedia data from the first wireless communications device 121 with overlapping content with transmitted second multimedia data from the second wireless communications device 122.

### action 803

In response to the determining in action 801 the first node 111, 122 transmits a coordination message to the first wireless communications device 121 comprising an indication to refrain from transmitting at least part of the first multimedia data in UL to the radio network node 111.

### action 804

In some embodiments the first node 111, 122 receives a further part of the first multimedia data not including the at least part of the first multimedia data indicated to be refrained from transmitted in UL.

### action 805

The first node 111, 122 may forward the further part of the first multimedia data to the network node 111.

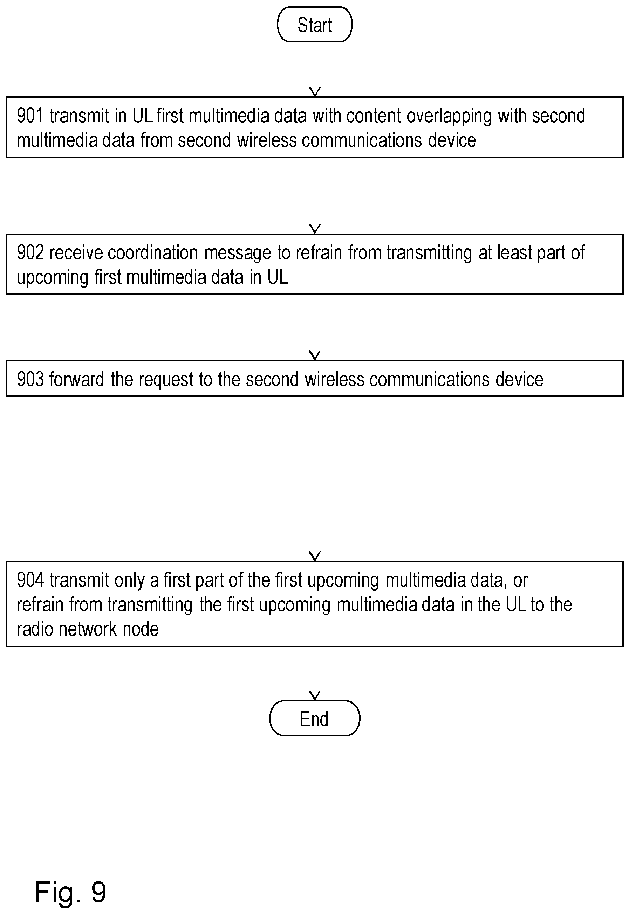

Exemplifying methods according to embodiments herein will now be described with reference to a flow chart in **Figure 9** and with continued reference to Figure 3. The flow chart illustrates a method, performed by the wireless communications device 121, for coordinated UL transmission of multimedia data in the wireless communications network 100.

### action 901

The wireless communications device 121 may transmit in UL first multimedia data with content overlapping with second multimedia data from second wireless communications device.

### action 902

The wireless communications device 121 receives, from the first node 111, 122 a coordination message comprising an indication to refrain from transmitting at least part of first multimedia data in UL to the radio network node 111.

### Action 903

In some embodiments the received coordination message further comprises a second indication, for the second wireless communications device 122, to refrain from transmitting at least part of second multimedia data in the UL to the radio network node 111. For example, the second indication may be an indication of which parts of the second multimedia data the second device should transmit.

Then the wireless communications device 121 may forward the coordination message to the second wireless communications device 122.

### action 904

Based on the received coordination message the wireless communications device 121 transmits only a part, not comprising the at least part, of the first multimedia data in the UL to the radio network node 111, or refrains from transmitting the first multimedia data in the UL to the radio network node 111.

### Details of the example embodiments

- Impact of D2D communication delay on media production/streaming: Generally, the media production and streaming videos have some sort of playout buffer that would allow glitches to be handled. The media content uses codecs which are designed to be tailored for such interruptions and rate adaptions. Moreover, the sidelink coordination is not heavy coordination (control) traffic that will cause much impact. In fact, it is aimed to reduce the overall bottlenecks in the system, reduce unwanted content and improve the QoS of the wanted content.
- Periodic or event-based communication between wireless communications devices: Communication between wireless communications devices may be periodic or event based. In case of periodic communication, the communication may be configured by the network, e.g., by the radio access node 111, through RRC configuration or dynamically by DCI. In case of event-based communication, different actions may trigger the communication between the wireless communications devices, e.g, the gNB may request cameras to take another angle of e.g. the area 410 previously described.
- The radio resources for D2D communication may be assigned by a network node (e.g. gNB) or UEs may autonomously decide to use the configured resources.

Some embodiments herein utilize sidelink communications in media production. For example, wireless communications devices (e.g., cameras) may coordinate UL transmissions of overlapping media content with each other and/or with the BS thereby improving the spectral utilization of radio resources, energy efficiency and reducing the interference in the radio network.

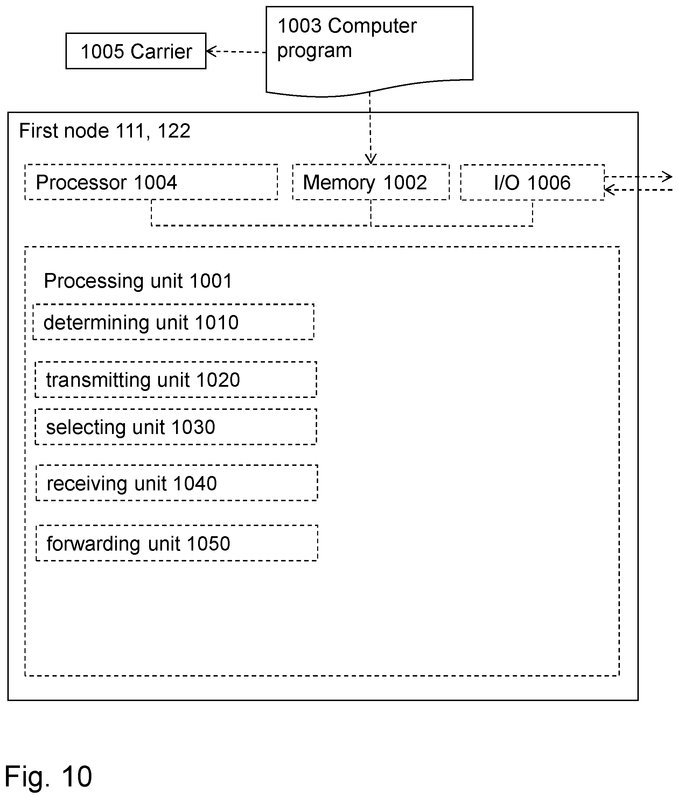

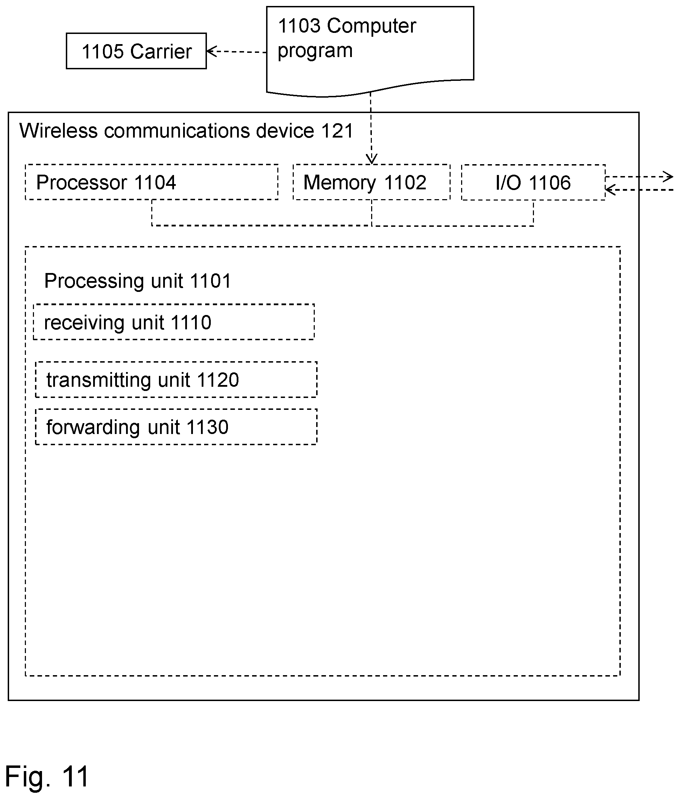

**Figure 10** shows an example of the first node 111, 122 and **Figure 11** shows an example of the wireless communications device 122. The first node 111, 122 may be configured to perform the method actions of Figure 8 above. Thus, the first node 111, 122 is configured for coordinating UL transmissions of associated image data from multiple wireless communications devices 121, 122 in the wireless communications network 100.

The wireless communications device 122 may be configured to perform the method actions of Figure 9 above. Thus, the wireless communications device 122 is configured for coordinated UL transmission of multimedia data in the wireless communications network 100.

The first node 111, 122 and the wireless communications device 122 may comprise a respective **input and output interface, I/O, 1006, 1106** configured to communicate with each other, see Figures 10-11. The input and output interface may comprise a wireless receiver (not shown) and a wireless transmitter (not shown).

The first node 111, 122 and the wireless communications device 122 may comprise a respective **processing unit 1001, 1101** for performing the above method actions. The respective processing unit 1001, 1101 may comprise further sub-units which will be described below.

The first node 111, 122 is further configured to, e.g. by means of a **determining unit 1010,** determine that the first and the second wireless communications device 121, 122 of the multiple wireless communications devices 121, 122 intend to transmit respective first and second multimedia data in UL to the radio network node 111. The first and second multimedia data comprising at least partially overlapping content.

In some embodiments the first node 111, 122 is configured to determine that the first and the second wireless communications devices 121, 122 will transmit the respective first and second multimedia data with at least partially overlapping content by being configured to detect that the first and the second wireless communications device 121, 122 has transmitted respective first and second multimedia data in UL to the radio network node 111, with at least partially overlapping content.

The first node 111, 122 is further configured to, e.g. by means of a **transmitting unit 1020,** transmit, in response to the determination, the coordination message to the first wireless communications device 121 comprising an indication to refrain from transmitting at least part of the first multimedia data in UL to the radio network node (111).

As mentioned above, the first node may be the wireless communications device 122. Then the coordination message and the respective message are transmitted directly between the wireless communications devices 121, 122 without passing the network node 111 of the wireless communications network 100.

The first node 111, 122 may further be configured to, e.g. by means of a **selecting unit 1030,** select the at least part of the first multimedia data not to be transmitted in UL based on the part of transmitted first multimedia data from the first wireless communications device 121 with overlapping content with transmitted second multimedia data from the second wireless communications device 122.

In some embodiments the first and second wireless communications device 121, 122 comprises the respective image capturing device C1, C2. Then the first node 111, 122 may be configured to determine that the first and the second wireless communications devices 121, 122 will transmit the respective first and second multimedia data with at least partially overlapping content by being configured to: receive the respective message from the first and second wireless communications devices 121, 122, the respective message comprising information about settings of parameters of the respective image capturing device C1, C2, the parameters affecting the image data; and determine, based on the received settings of the parameters of the respective image capturing device C1, C2, that content of first image data of the first multimedia data at least partially overlaps content of second image data of the second multimedia data.

For those embodiments the first node 111, 122 may further be configured to, e.g. by means of a **receiving unit 1040,** receive the respective message from the first and second wireless communications devices 121, 122.

The first node 111, 122 may further be configured to receive the further part of the first multimedia data not including the at least part of the first multimedia data indicated to be refrained from transmitted in UL.

Then the first node 111, 122 may further be configured to, e.g. by means of a **forwarding unit 1050,** forward the further part of the first multimedia data to the network node 111.

The wireless communications device 122 may further comprise a **receiving unit 1110, and transmitting unit 1120,** see Figure 11, which may receive and transmit messages and/or signals.

The wireless communications device 122 is configured to, e.g. by means of the receiving unit 1110, receive, from the first node 111, 122 the coordination message comprising an indication to refrain from transmitting at least part of first multimedia data in UL to the radio network node 111.

The wireless communications device 122 may further be configured to receive the coordination message comprising the second indication, for the second wireless communications device 122, to refrain from transmitting at least part of second multimedia data in the UL to the radio network node 111.

The wireless communications device 122 is further configured to, e.g. by means of **a transmitting unit 1120,** transmit only the part, not comprising the at least part, of the first multimedia data in the UL to the radio network node 111, or refrain from transmitting the first multimedia data in the UL to the radio network node 111, based on the received coordination message.

The wireless communications device 122 may further be configured to, e.g. by means of **a forwarding unit 1130,** forward the coordination message to the second wireless communications device 122.

The embodiments herein may be implemented through a respective processor or one or more processors, such as the respective **processor 1004, and 1104,** of a processing circuitry in the first node 111, 122 and the wireless communications device 122, and depicted in Figures 10-11 together with computer program code for performing the functions and actions of the embodiments herein. The program code mentioned above may also be provided as a computer program product, for instance in the form of a data carrier carrying computer program code for performing the embodiments herein when being loaded into the respective first node 111, 122 and wireless communications device 122. One such carrier may be in the form of a CD ROM disc. It is however feasible with other data carriers such as a memory stick. The computer program code may furthermore be provided as pure program code on a server and downloaded to the respective first node 111, 122 and wireless communications device 122.

The first node 111, 122 and the wireless communications device 122 may further comprise a respective **memory 1002, and 1102** comprising one or more memory units. The memory comprises instructions executable by the processor in the first node 111, 122 and wireless communications device 122.

Each respective memory 1002 and 1102 is arranged to be used to store e.g. information, data, configurations, and applications to perform the methods herein when being executed in the respective first node 111, 122 and wireless communications device 122.

In some embodiments, a respective **computer program 1003 and 1103** comprises instructions, which when executed by the at least one processor, cause the at least one processor of the respective first node 111, 122 and wireless communications device 122 to perform the actions above.

In some embodiments, a respective **carrier 1005 and 1105** comprises the respective computer program, wherein the carrier is one of an electronic signal, an optical signal, an electromagnetic signal, a magnetic signal, an electric signal, a radio signal, a microwave signal, or a computer-readable storage medium.

Those skilled in the art will also appreciate that the units described above may refer to a combination of analog and digital circuits, and/or one or more processors configured with software and/or firmware, e.g. stored in the respective first node 111, 122 and wireless communications device 122, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

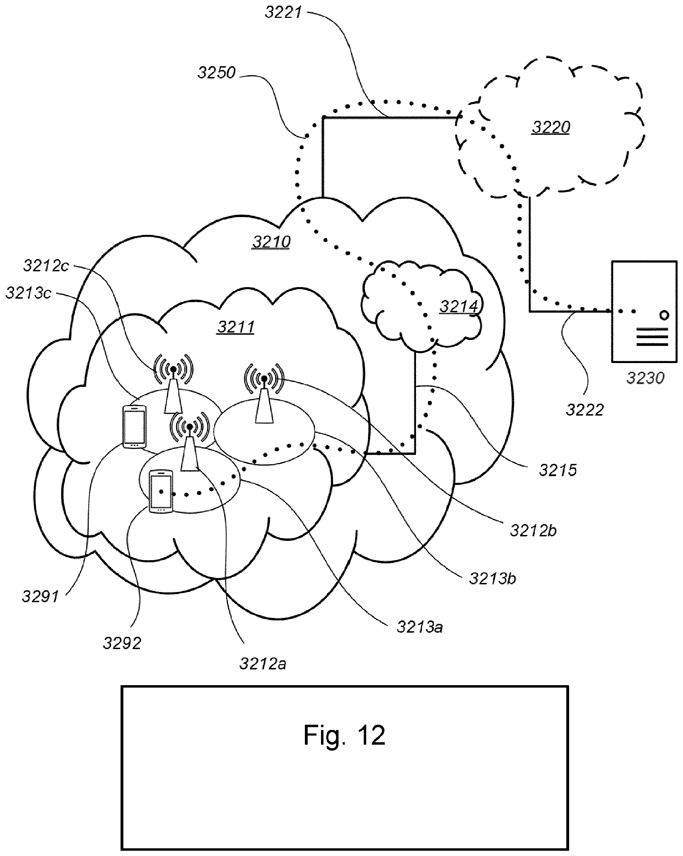

With reference to **Figure 12****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as the source and target access node 111, 112, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) such as a Non-AP STA 3291 located in coverage area 3213c is configured to wirelessly connect to, or be paged by, the corresponding base station 3212c. A second UE 3292 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

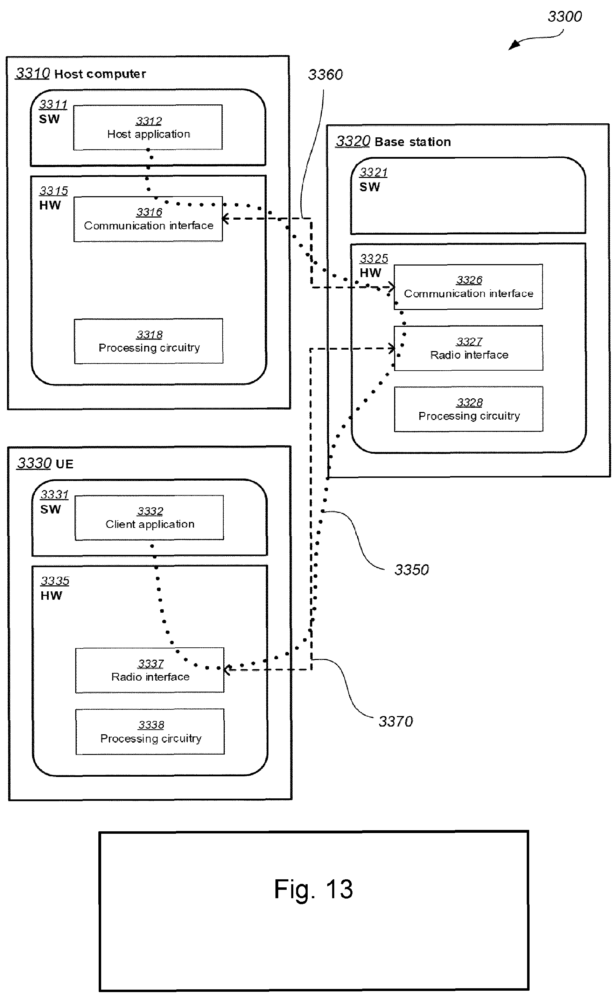

The communication system of Figure 12 as a whole enables connectivity between one of the connected UEs 3291, 3292 such as e.g. the UE 121, and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230. Example implementations, in accordance with an embodiment, of the UE, base station and host computer discussed in the preceding paragraphs will now be described with reference to Figure 13. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.
The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 13) served by the base station 3320. The communication interface 3326 may be configured to facilitate a connection 3360 to the host computer 3310. The connection 3360 may be direct or it may pass through a core network (not shown in Figure 13) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.
The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.
It is noted that the host computer 3310, base station 3320 and UE 3330 illustrated in Figure 13 may be identical to the host computer 3230, one of the base stations 3212a, 3212b, 3212c and one of the UEs 3291, 3292 of Figure 12, respectively. This is to say, the inner workings of these entities may be as shown in Figure 13 and independently, the surrounding network topology may be that of Figure 12.

In Figure 13, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the data rate, latency, power consumption and thereby provide benefits such as reduced user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

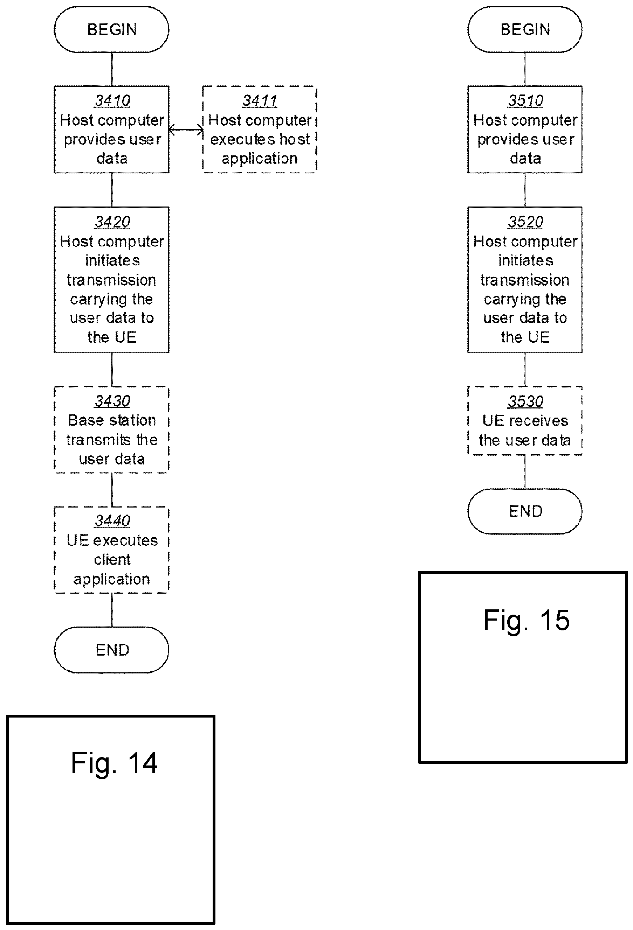

FIGURE 14 is a flowchart illustrating a method implemented in a communication system, in accordance with one embodiment. The communication system includes a host computer, a base station such as a AP STA, and a UE such as a Non-AP STA which may be those described with reference to Figure 12 and Figure 13. For simplicity of the present disclosure, only drawing references to Figure 14 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

FIGURE 15 is a flowchart illustrating a method implemented in a communication system, in accordance with one embodiment. The communication system includes a host computer, a base station such as a AP STA, and a UE such as a Non-AP STA which may be those described with reference to Figure 12 and Figure 13. For simplicity of the present disclosure, only drawing references to Figure 15 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

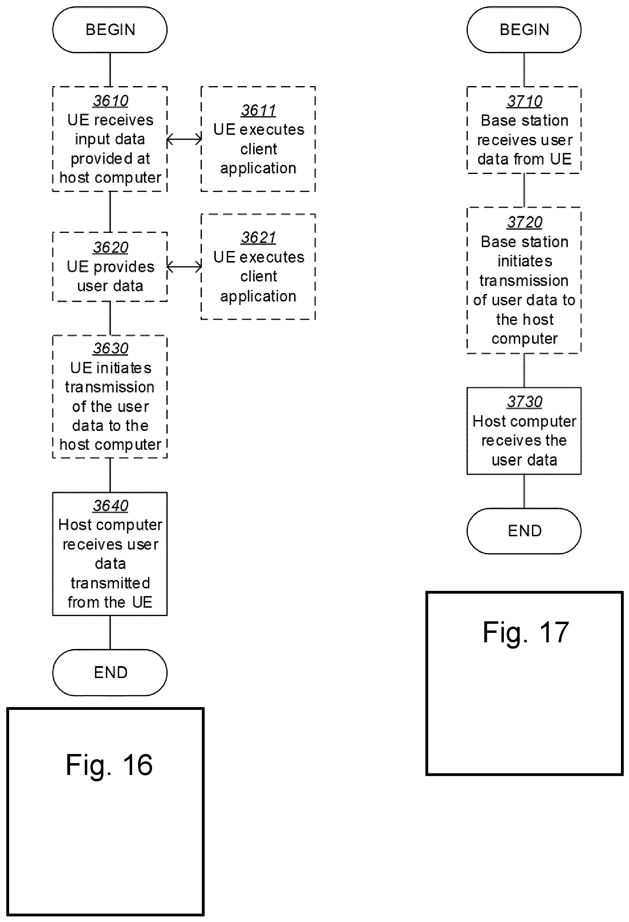

FIGURE 16 is a flowchart illustrating a method implemented in a communication system, in accordance with one embodiment. The communication system includes a host computer, a base station such as a AP STA, and a UE such as a Non-AP STA which may be those described with reference to Figure 12 and Figure 13. For simplicity of the present disclosure, only drawing references to Figure 16 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

FIGURE 17 is a flowchart illustrating a method implemented in a communication system, in accordance with one embodiment. The communication system includes a host computer, a base station such as a AP STA, and a UE such as a Non-AP STA which may be those described with reference to Figures 12 and 13. For simplicity of the present disclosure, only drawing references to Figure 17 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

When using the word "comprise" or "comprising" it shall be interpreted as non-limiting, i.e. meaning "consist at least of".

The embodiments herein are not limited to the above described preferred **embodiments.**

## Claims

1. A method, performed by a first node (111, 122), for coordinating uplink, UL, transmissions of associated image data from multiple wireless communications devices (121, 122) in a wireless communications network (100), the method comprises:
determining (801) that a first and a second wireless communications device (121, 122) of the multiple wireless communications devices (121, 122) will transmit respective first and second image data in UL to a radio network node (111) and that the first and second image data comprises at least partially overlapping content; wherein:
the determining (801) comprises receiving respective messages from the first and second wireless communications devices (121, 122), the respective messages comprising information about settings of parameters of a respective image capturing device (C1, C2) of the first and second wireless communications device (121, 122), the parameters affecting the image data; and wherein the determination that content of first image data at least partially overlaps content of second image data is based on the received settings of the parameters of the respective image capturing device (C1, C2); and
in response to the determining, transmitting (803) to the first wireless communications device (121) a coordination message comprising an indication to refrain from transmitting at least part of the first image data in UL to the radio network node (111).

2. The method according to claim 1, wherein the first image data that will be transmitted in a first UL transmission time resource at least partly overlaps a second UL transmission time resource in which the second wireless communications device will transmit a second image data in UL to the radio network node (111).

3. The method according to any of the claims 1-2, wherein the indication to refrain from transmitting the at least part of the image data indicates to transmit a specific part of the image data.

4. The method according to any of the claims 1-2, wherein the indication to refrain from transmitting the at least part of the image data indicates to refrain from transmitting the entire image data.

5. The method according to any of claims 1-4, wherein the parameters of the respective image capturing device (C1, C2) comprise one or more of: field of view, image sensor resolution, depth of field, image frame rate, time for capture of the image data, position of the image capturing device, and viewing direction of the image capturing device (C1, C2).

6. The method according to any of the claims 1-5, wherein the first node is a wireless communications device (122) and wherein the coordination message and the respective message are transmitted directly between the wireless communications devices (121, 122) without passing the network node (111) of the wireless communications network (100).

7. The method according to claim 6, further comprising:
receiving (804) a further part of the first image data not including the at least part of the first image data indicated to be refrained from transmitted in UL; and
forwarding (805) the further part of the first image data to the network node (111).

8. A first node (111, 122), for coordinating uplink, UL, transmissions of associated image data from multiple wireless communications devices (121, 122) in a wireless communications network (100), the first node (111, 122) being configured to:
determine that a first and a second wireless communications device (121, 122) of the multiple wireless communications devices (121, 122) will transmit respective first and second image data in UL to a radio network node (111) and that the first and second image data comprising at least partially overlapping content;
wherein the determination is based on receiving respective messages from the first and second wireless communications devices (121, 122), the respective messages comprising information about settings of parameters of a respective image capturing device (C1, C2) of the first and the second wireless communications device (121, 122), the parameters affecting the image data; and wherein the determination that content of first image data at least partially overlaps content of second image data is based on the received settings of the parameters of the respective image capturing device (C1, C2); and
transmit, in response to the determination, to the first wireless communications device (121) a coordination message comprising an indication to refrain from transmitting at least part of the first image data in UL to the radio network node (111).

9. The first node (111, 122) according to claim 8, being further configured to perform the operations corresponding to any of the methods of claims 2-7.

10. The first node (111, 122) according to any of the claims 8-9, wherein the first node is a wireless communications device (122) and wherein the coordination message and the respective message are transmitted directly between the wireless communications devices (121, 122) without passing a network node (111) of the wireless communications network (100).

## Patentansprüche

1. Verfahren, das von einem ersten Knoten (111, 122) durchgeführt wird, zur Koordinierung von Uplink-, UL-, Übertragungen zugehöriger Bilddaten von mehreren drahtlosen Kommunikationsvorrichtungen (121, 122) in einem drahtlosen Kommunikationsnetz (100), wobei das Verfahren umfasst:
Bestimmen (801), dass eine erste und eine zweite drahtlose Kommunikationsvorrichtung (121, 122) der mehreren drahtlosen Kommunikationsvorrichtungen (121, 122) jeweilige erste und zweite Bilddaten im UL an einen Funknetzknoten (111) übertragen werden und dass die ersten und zweiten Bilddaten zumindest teilweise überlappende Inhalte umfassen; wobei:
das Bestimmen (801) das Empfangen jeweiliger Nachrichten von der ersten und der zweiten drahtlosen Kommunikationsvorrichtung (121, 122) umfasst, wobei die jeweiligen Nachrichten Informationen über Einstellungen von Parametern einer jeweiligen Bilderfassungsvorrichtung (C1, C2) der ersten und der zweiten drahtlosen Kommunikationsvorrichtung (121, 122) umfassen, wobei die Parameter die Bilddaten beeinflussen; und wobei die Bestimmung, dass der Inhalt erster Bilddaten den Inhalt zweiter Bilddaten zumindest teilweise überlappt, auf den empfangenen Einstellungen der Parameter der jeweiligen Bilderfassungsvorrichtung (C1, C2) basiert; und
als Reaktion auf das Bestimmen Übertragen (803) einer Koordinierungsnachricht an die erste drahtlose Kommunikationsvorrichtung (121), die eine Angabe umfasst, die Übertragung zumindest eines Teils der ersten Bilddaten im UL an den Funknetzknoten (111) zu unterlassen.

2. Verfahren nach Anspruch 1, wobei die ersten Bilddaten, die in einer ersten UL-Übertragungszeitressource übertragen werden, eine zweite UL-Übertragungszeitressource zumindest teilweise überlappen, in der die zweite drahtlose Kommunikationsvorrichtung zweite Bilddaten im UL an den Funknetzknoten (111) überträgt.

3. Verfahren nach einem der Ansprüche 1 bis 2, wobei die Angabe, die Übertragung des zumindest einen Teils der Bilddaten zu unterlassen, angibt, einen bestimmten Teil der Bilddaten zu übertragen.

4. Verfahren nach einem der Ansprüche 1 bis 2, wobei die Angabe, die Übertragung des zumindest einen Teils der Bilddaten zu unterlassen, angibt, die Übertragung der gesamten Bilddaten zu unterlassen.

5. Verfahren nach einem der Ansprüche 1 bis 4, wobei die Parameter der jeweiligen Bilderfassungsvorrichtung (C1, C2) eines oder mehrere umfassen aus: Sichtfeld, Bildsensorauflösung, Schärfentiefe, Bildwiederholrate, Zeitpunkt der Erfassung der Bilddaten, Position der Bilderfassungsvorrichtung und Blickrichtung der Bilderfassungsvorrichtung (C1, C2).

6. Verfahren nach einem der Ansprüche 1 bis 5, wobei der erste Knoten eine drahtlose Kommunikationsvorrichtung (122) ist und wobei die Koordinierungsnachricht und die jeweilige Nachricht direkt zwischen den drahtlosen Kommunikationsvorrichtungen (121, 122) übertragen werden, ohne den Netzknoten (111) des drahtlosen Kommunikationsnetzes (100) zu passieren.

7. Verfahren nach Anspruch 6, ferner umfassend:
Empfangen (804) eines weiteren Teils der ersten Bilddaten, der den zumindest einen Teil der ersten Bilddaten, dessen Übertragung im UL zu unterlassen angegeben ist, nicht umfasst; und
Weiterleiten (805) des weiteren Teils der ersten Bilddaten an den Netzknoten (111).

8. Erster Knoten (111, 122) zur Koordinierung von Uplink-, UL-, Übertragungen zugehöriger Bilddaten von mehreren drahtlosen Kommunikationsvorrichtungen (121, 122) in einem drahtlosen Kommunikationsnetz (100), wobei der erste Knoten (111, 122) dazu eingerichtet ist:
Bestimmen, dass eine erste und eine zweite drahtlose Kommunikationsvorrichtung (121, 122) der mehreren drahtlosen Kommunikationsvorrichtungen (121, 122) jeweilige erste und zweite Bilddaten im UL an einen Funknetzknoten (111) übertragen werden und dass die ersten und zweiten Bilddaten zumindest teilweise überlappende Inhalte umfassen;
wobei das Bestimmen auf dem Empfangen jeweiliger Nachrichten von der ersten und der zweiten drahtlosen Kommunikationsvorrichtung (121, 122) basiert, wobei die jeweiligen Nachrichten Informationen über Einstellungen von Parametern einer jeweiligen Bilderfassungsvorrichtung (C1, C2) der ersten und der zweiten drahtlosen Kommunikationsvorrichtung (121, 122) umfassen, wobei die Parameter die Bilddaten beeinflussen; und wobei die Bestimmung, dass der Inhalt erster Bilddaten den Inhalt zweiter Bilddaten zumindest teilweise überlappt, auf den empfangenen Einstellungen der Parameter der jeweiligen Bilderfassungsvorrichtung (C1, C2) basiert; und
als Reaktion auf das Bestimmen Übertragen einer Koordinierungsnachricht an die erste drahtlose Kommunikationsvorrichtung (121), die eine Angabe umfasst, die Übertragung zumindest eines Teils der ersten Bilddaten im UL an den Funknetzknoten (111) zu unterlassen.

9. Erster Knoten (111, 122) nach Anspruch 8, der ferner eingerichtet ist, die Vorgänge durchzuführen, die einem der Verfahren nach den Ansprüchen 2 bis 7 entsprechen.

10. Erster Knoten (111, 122) nach einem der Ansprüche 8 bis 9, wobei der erste Knoten eine drahtlose Kommunikationsvorrichtung (122) ist und wobei die Koordinierungsnachricht und die jeweilige Nachricht direkt zwischen den drahtlosen Kommunikationsvorrichtungen (121, 122) übertragen werden, ohne einen Netzknoten (111) des drahtlosen Kommunikationsnetzes (100) zu passieren.

## Revendications

1. Procédé, réalisé par un premier nœud (111, 122), pour la coordination de transmissions en liaison montante, UL, de données d'image associées provenant de multiples dispositifs de communication sans fil (121, 122) dans un réseau de communication sans fil (100), le procédé comprenant :
la détermination (801) qu'un premier et un second dispositif de communication sans fil (121, 122) des multiples dispositifs de communication sans fil (121, 122) transmettront des première et seconde données d'image respectives en UL à un nœud de réseau radio (111) et que les première et seconde données d'image comprennent un contenu se chevauchant au moins partiellement ; dans lequel :
la détermination (801) comprend la réception de messages respectifs en provenance des premier et second dispositifs de communication sans fil (121, 122), les messages respectifs comprenant des informations concernant des réglages de paramètres d'un dispositif de capture d'image (C1, C2) respectif des premier et second dispositifs de communication sans fil (121, 122), les paramètres affectant les données d'image ; et dans lequel la détermination du fait que le contenu des premières données d'image chevauche au moins partiellement le contenu des secondes données d'image est basée sur les réglages reçus des paramètres du dispositif de capture d'image (C1, C2) respectif ; et
en réponse à la détermination, la transmission (803) au premier dispositif de communication sans fil (121) d'un message de coordination comprenant une indication pour l'abstention de la transmission d'au moins une partie des premières données d'image en UL au nœud de réseau radio (111).

2. Procédé selon la revendication 1, dans lequel les premières données d'image qui seront transmises dans une première ressource de temps de transmission UL chevauchent au moins partiellement une seconde ressource de temps de transmission UL dans laquelle le second dispositif de communication sans fil transmettra de secondes données d'image en UL au nœud de réseau radio (111).

3. Procédé selon l'une quelconque des revendications 1 à 2, dans lequel l'indication pour l'abstention de la transmission de l'au moins une partie des données d'image indique la transmission d'une partie spécifique des données d'image.

4. Procédé selon l'une quelconque des revendications 1 à 2, dans lequel l'indication pour l'abstention de la transmission de l'au moins une partie des données d'image indique l'abstention de la transmission des données d'image entières.

5. Procédé selon l'une quelconque des revendications 1 à 4, dans lequel les paramètres du dispositif de capture d'image (C1, C2) respectif comprennent un ou plusieurs parmi : un champ de vision, une résolution de capteur d'image, une profondeur de champ, une fréquence de trames d'image, un temps pour la capture des données d'image, une position du dispositif de capture d'image, et une direction de visualisation du dispositif de capture d'image (C1, C2).

6. Procédé selon l'une quelconque des revendications 1 à 5, dans lequel le premier nœud est un dispositif de communication sans fil (122) et dans lequel le message de coordination et le message respectif sont transmis directement entre les dispositifs de communication sans fil (121, 122) sans passer par le nœud de réseau (111) du réseau de communication sans fil (100).

7. Procédé selon la revendication 6, comprenant en outre :
la réception (804) d'une partie supplémentaire des premières données d'image n'incluant pas l'au moins une partie des premières données d'image indiquée comme devant faire l'objet d'une abstention de transmission en UL ; et
le transfert (805) de la partie supplémentaire des premières données d'image au nœud de réseau (111).

8. Premier nœud (111, 122), pour la coordination de transmissions en liaison montante, UL, de données d'image associées provenant de multiples dispositifs de communication sans fil (121, 122) dans un réseau de communication sans fil (100), le premier nœud (111, 122) étant configuré pour :
la détermination qu'un premier et un second dispositif de communication sans fil (121, 122) des multiples dispositifs de communication sans fil (121, 122) transmettront des première et seconde données d'image respectives en UL à un nœud de réseau radio (111) et que les première et seconde données d'image comprennent un contenu se chevauchant au moins partiellement ;
dans lequel la détermination est basée sur la réception de messages respectifs en provenance des premier et second dispositifs de communication sans fil (121, 122), les messages respectifs comprenant des informations concernant des réglages de paramètres d'un dispositif de capture d'image (C1, C2) respectif du premier et du second dispositif de communication sans fil (121, 122), les paramètres affectant les données d'image ; et dans lequel la détermination du fait que le contenu des premières données d'image chevauche au moins partiellement le contenu des secondes données d'image est basée sur les réglages reçus des paramètres du dispositif de capture d'image (C1, C2) respectif ; et
la transmission, en réponse à la détermination, au premier dispositif de communication sans fil (121), d'un message de coordination comprenant une indication pour l'abstention de la transmission d'au moins une partie des premières données d'image en UL au nœud de réseau radio (111).

9. Premier nœud (111, 122) selon la revendication 8, étant en outre configuré pour la réalisation des opérations correspondant à l'un quelconque des procédés selon les revendications 2 à 7.

10. Premier nœud (111, 122) selon l'une quelconque des revendications 8 à 9, dans lequel le premier nœud est un dispositif de communication sans fil (122) et dans lequel le message de coordination et le message respectif sont transmis directement entre les dispositifs de communication sans fil (121, 122) sans passer par un nœud de réseau (111) du réseau de communication sans fil (100).
